# EUROPEAN PATENT APPLICATION

(11) **EP 4 815 593 A1**
(43) Date of publication of application: **30.09.2026**
(21) Application number: 24893258.4
(22) Date of filing: 07.11.2024
(51) Int. Cl.: H04W 72/0446

(54) **CHANNEL REPEAT TRANSMISSION METHOD AND APPARATUS, AND UE, NETWORK-SIDE DEVICE AND STORAGE MEDIUM**

(30) Priority: 22.11.2023 CN 202311567506
(71) Applicant: Vivo Mobile Communication Co., Ltd., Dongguan, Guangdong 523863 (CN)
(72) Inventor: LU, Zhi, Dongguan, Guangdong 523863 (CN); LIN, Zhipeng, Dongguan, Guangdong 523863 (CN); CHEN, Xiaohang, Dongguan, Guangdong 523863 (CN)
(74) Representative: Studio Torta S.p.A.
(86) International application number: PCT/CN2024/130606
(87) International publication number: WO 2025/108100

(57) **Abstract**

This application discloses a channel repetition transmission method and apparatus, UE, a network side device, and a storage medium, and pertains to the field of communication technologies. The channel repetition transmission method in embodiments of this application includes: obtaining, by UE, configuration information of physical uplink channel repetition transmission, where the configuration information is used to determine an available time-frequency resource for the physical uplink channel repetition transmission; and performing, by the UE, transmission of the physical uplink channel repetition transmission by using the available time-frequency resource, where the available time-frequency resource includes at least one of the following: a UL subband in a DL time domain unit in which there is a synchronization signal and physical broadcast channel block SSB; a UL subband in a DL time domain unit in which there is a common DL channel; a UL subband in a DL time domain unit in which there is no SSB or common DL channel; a UL subband in a UL time domain unit; a UL time domain unit; and a flexible time domain unit.

## Description

### CROSS-REFERENCE TO RELATED APPLICATIONS

This application claims priority to Chinese Patent Application No. 202311567506.6, filed on November 22, 2023, which is incorporated herein by reference in its entirety.

### TECHNICAL FIELD

This application pertains to the field of communication technologies, and specifically relates to a channel repetition transmission method and apparatus, UE, a network side device, and a storage medium.

### BACKGROUND

With development of communication technologies, future mobile communication systems need to adapt to more diversified scenarios and service requirements, such as enhanced mobile broadband (Enhanced Mobile Broadband, eMBB), ultra-reliable low-latency communication (Ultra-Reliable Low-Latency Communication, URLLC), and massive machine type communication (Massive Machine Type Communication, mMTC). These scenarios impose requirements on the mobile communication systems for high reliability, low latency, high bandwidth, and wide coverage. In related technologies, subband non-overlapping full-duplex may be employed to allow simultaneous uplink and downlink reception and sending or sending and reception on non-overlapping frequency subband resources within a carrier bandwidth, thereby improving a transmission latency and enhanced coverage.

However, because user equipment (User Equipment, UE) can only send a random access response (Random Access Response, RAR)-physical uplink shared channel (Physical Uplink Shared Channel, PUSCH) on an uplink (UpLink, UL) symbol or a flexible symbol, in a network configuration dominated by a downlink (DownLink, DL) service such as a time division duplex (Time Division Duplex, TDD) uplink-downlink configuration of a distributed digital data service unit (Distributed Digital Data Service Unit, DDDSU), time domain resources for the UE to send the RAR-PUSCH are restricted. This results in a prolonged transmission latency and a poor effect of enhanced coverage.

### SUMMARY

Embodiments of this application provide a channel repetition transmission method and apparatus, UE, a network side device, and a storage medium, to reduce a transmission latency of the UE and improve an effect of enhanced coverage.

According to a first aspect, a channel repetition transmission method is provided. The method includes: obtaining, by UE, configuration information of physical uplink channel repetition transmission, where the configuration information is used to determine an available time-frequency resource for the physical uplink channel repetition transmission; and performing, by the UE, transmission of the physical uplink channel repetition transmission by using the available time-frequency resource, where the available time-frequency resource includes at least one of the following: a UL subband in a DL time domain unit in which there is a synchronization signal and physical broadcast channel block SSB; a UL subband in a DL time domain unit in which there is a common DL channel; a UL subband in a DL time domain unit in which there is no SSB or common DL channel; a UL subband in a UL time domain unit; a UL time domain unit; and a flexible time domain unit.

According to a second aspect, a channel repetition transmission method is provided. The method includes: sending, by a network side device, configuration information of physical uplink channel repetition transmission to UE, where the configuration information is used to determine an available time-frequency resource for the physical uplink channel repetition transmission, where the available time-frequency resource includes at least one of the following: a UL subband in a DL time domain unit in which there is a synchronization signal and physical broadcast channel block SSB; a UL subband in a DL time domain unit in which there is a common DL channel; a UL subband in a DL time domain unit in which there is no SSB or common DL channel; a UL subband in a UL time domain unit; a UL time domain unit; and a flexible time domain unit.

According to a third aspect, a channel repetition transmission apparatus is provided. The apparatus includes an obtaining module and a transmission module, where the obtaining module is configured to obtain configuration information of physical uplink channel repetition transmission, where the configuration information is used to determine an available time-frequency resource for the physical uplink channel repetition transmission; and the transmission module is configured to perform transmission of the physical uplink channel repetition transmission by using the available time-frequency resource, where the available time-frequency resource includes at least one of the following: a UL subband in a DL time domain unit in which there is a synchronization signal and physical broadcast channel block SSB; a UL subband in a DL time domain unit in which there is a common DL channel; a UL subband in a DL time domain unit in which there is no SSB or common DL channel; a UL subband in a UL time domain unit; a UL time domain unit; and a flexible time domain unit.

According to a fourth aspect, a channel repetition transmission apparatus is provided. The apparatus includes a sending module, where the sending module is configured to send configuration information of physical uplink channel repetition transmission to UE, where the configuration information is used to determine an available time-frequency resource for the physical uplink channel repetition transmission, where the available time-frequency resource includes at least one of the following: a UL subband in a DL time domain unit in which there is a synchronization signal and physical broadcast channel block SSB; a UL subband in a DL time domain unit in which there is a common DL channel; a UL subband in a DL time domain unit in which there is no SSB or common DL channel; a UL subband in a UL time domain unit; a UL time domain unit; and a flexible time domain unit.

According to a fifth aspect, UE is provided. The UE includes a processor and a memory, the memory stores a program or an instruction that can be run on the processor, and the program or the instruction is executed by the processor to implement the steps of the method according to the first aspect.

According to a sixth aspect, UE is provided, including a processor and a communication interface. The processor is configured to obtain configuration information of physical uplink channel repetition transmission; and the communication interface is configured to perform transmission of the physical uplink channel repetition transmission by using the available time-frequency resource.

According to a seventh aspect, a network side device is provided. The network side device includes a processor and a memory, the memory stores a program or an instruction that can be run on the processor, and the program or the instruction is executed by the processor to implement the steps of the method according to the second aspect.

According to an eighth aspect, a network side device is provided, including a processor and a communication interface. The communication interface is configured to send configuration information of physical uplink channel repetition transmission to UE.

According to a ninth aspect, a readable storage medium is provided. The readable storage medium stores a program or an instruction, and the program or the instruction is executed by a processor to implement the steps of the method according to the first aspect or the steps of the method according to the second aspect.

According to a tenth aspect, a channel repetition transmission system is provided, including UE and a network side device. The UE may be configured to perform the steps of the method according to the first aspect, and the network side device may be configured to perform the steps of the method according to the second aspect.

According to an eleventh aspect, a chip is provided. The chip includes a processor and a communication interface, the communication interface is coupled to the processor, and the processor is configured to run a program or an instruction to implement the method according to the first aspect or the method according to the second aspect.

According to a twelfth aspect, a computer program/program product is provided. The computer program/program product is stored in a storage medium, and the program/program product is executed by at least one processor to implement the method according to the first aspect or the method according to the second aspect.

In the embodiments of this application, the UE obtains configuration information of physical uplink channel repetition transmission, where the configuration information is used to determine an available time-frequency resource for the physical uplink channel repetition transmission; and the UE performs transmission of the physical uplink channel repetition transmission by using the available time-frequency resource, where the available time-frequency resource includes at least one of the following: a UL subband in a DL time domain unit in which there is a synchronization signal and physical broadcast channel block SSB; a UL subband in a DL time domain unit in which there is a common DL channel; a UL subband in a DL time domain unit in which there is no SSB or common DL channel; a UL subband in a UL time domain unit; a UL time domain unit; and a flexible time domain unit. In this solution, because the available time-frequency resource for the physical uplink channel repetition transmission may be determined by using the configuration information of the physical uplink channel repetition transmission, the UE may perform data transmission by using the available time-frequency resource determined according to the configuration information, thereby improving utilization efficiency of a transmission resource of the UE, reducing a transmission latency of the UE, and improving an effect of enhanced coverage.

### BRIEF DESCRIPTION OF DRAWINGS

FIG. 1 is a possible schematic structural diagram of a communication system according to an embodiment of the present invention;
FIG. 2 (A) is a first schematic diagram of subband division in a full-duplex scenario according to an embodiment of this application;
FIG. 2 (B) is a second schematic diagram of subband division in a full-duplex scenario according to an embodiment of this application;
FIG. 3 is a first schematic flowchart of a channel repetition transmission method according to an embodiment of this application;
FIG. 4 is a schematic diagram of configuring an available time-frequency resource according to an embodiment of this application;
FIG. 5 is a second schematic flowchart of a channel repetition transmission method according to an embodiment of this application;
FIG. 6 (A) is a first schematic diagram of a transmit power threshold configured by a network side device according to an embodiment of this application;
FIG. 6 (B) is a second schematic diagram of a transmit power threshold configured by a network side device according to an embodiment of this application;
FIG. 7 (A) is a schematic diagram in which a frequency domain distance meets a first frequency domain distance threshold according to an embodiment of this application;
FIG. 7 (B), FIG. 7 (C), and FIG. 7 (D) are schematic diagrams of performing physical uplink channel transmission on an uplink usable resource block (RBs) according to an embodiment of this application;
FIG. 8 is a third schematic flowchart of a channel repetition transmission method according to an embodiment of this application;
FIG. 9 is a fourth schematic flowchart of a channel repetition transmission method according to an embodiment of this application;
FIG. 10 is a first schematic structural diagram of a channel repetition transmission apparatus according to an embodiment of this application;
FIG. 11 is a second schematic structural diagram of a channel repetition transmission apparatus according to an embodiment of this application;
FIG. 12 is a schematic structural diagram of a communication device according to an embodiment of this application;
FIG. 13 is a schematic structural diagram of hardware of UE according to an embodiment of this application; and
FIG. 14 is a schematic structural diagram of hardware of a network side device according to an embodiment of this application.

### DETAILED DESCRIPTION

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill based on the embodiments of this application shall fall within the protection scope of this application.

In this application, the terms "first", "second", and the like are intended to distinguish between similar objects but do not describe a specific order or sequence. It should be understood that the terms used in such a way are interchangeable in proper circumstances so that the embodiments of this application can be implemented in orders other than the order illustrated or described herein. Objects classified by "first" and "second" are usually of a same type, and the number of objects is not limited. For example, there may be one or more first objects. In addition, "or" in this application means at least one of connected objects. For example, "A or B" covers three schemes. Scheme 1: including A but excluding B; Scheme 2: including B but excluding A; Scheme 3: including both A and B. The character "/" generally indicates an "or" relationship between the associated objects.

The term "indication" in this application may be either a direct indication (or an explicit indication) or an indirect indication (or an implicit indication). A direct indication may be understood as that a sender explicitly informs a recipient of content such as specific information, an operation to be performed, or a requested result in a sent indication. An indirect indication may be understood as that a recipient determines corresponding information based on an indication sent by a sender, or makes a judgment and determines an operation to be performed or a requested result based on a judgment result.

It should be noted that technologies described in the embodiments of this application are not limited to a Long Term Evolution (Long Term Evolution, LTE)/LTE-Advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency division multiple access (Single-carrier Frequency Division Multiple Access, SC-FDMA), or other systems. The terms "system" and "network" in the embodiments of this application may be used interchangeably. The technologies described can be applied to both the systems and the radio technologies mentioned above as well as to other systems and radio technologies. The following describes a New Radio (New Radio, NR) system for example purposes, and NR terms are used in most of the following descriptions. These technologies can also be applied to systems other than the NR system, such as a 6th generation (6th Generation, 6G) communication system.

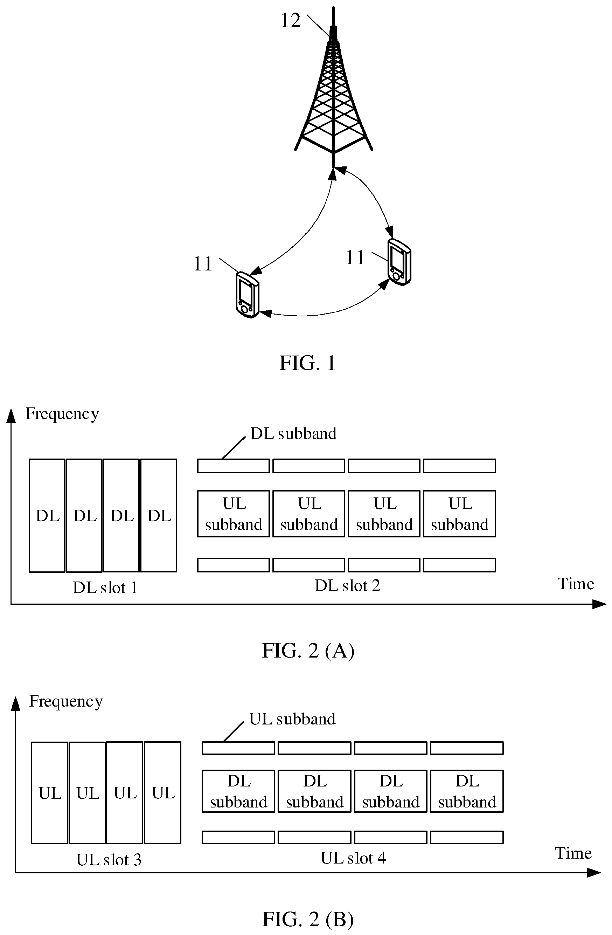

FIG. 1 is a block diagram of a wireless communication system to which the embodiments of this application can be applied. The wireless communication system includes UE 11 and a network side device 12. The UE 11 may be a terminal side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), shipborne equipment, pedestrian user equipment (Pedestrian User Equipment, PUE), a smart home (a home device with a wireless communication function, such as a refrigerator, a television, a washing machine, or a furniture), a game console, a personal computer (Personal Computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, and a smart chain), a smart wrist strap, a smart dress, and the like. The vehicle user equipment may also be referred to as an in-vehicle terminal, an in-vehicle controller, an in-vehicle module, an in-vehicle component, an in-vehicle chip, or an in-vehicle unit. In addition to the foregoing terminal device, the UE may be a chip in the terminal, such as a modem (Modem) chip or a system on chip (System on Chip, SoC). It should be noted that a specific type of the UE 11 is not limited in the embodiments of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, Wi-Fi) node, or the like. The base station may be referred to as a NodeB (NodeB, NB), an evolved NodeB (Evolved NodeB, eNB), a next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the field. As long as a same technical effect is achieved, the base station is not limited to a specified technical term. It should be noted that, in this application, only a base station in an NR system is used as an example, and a specific type of the base station is not limited.

The following describes some terms and nouns in the embodiments of this application.
1. PUSCH repetition transmission is an enhancement technology based on a quantity of times of repetition transmission in an uplink usable slot.
2. A time domain unit is a time unit with a minimum granularity.
3. A full-duplex mode allows data to be transmitted simultaneously in two directions. It is equivalent to a combination of two simplex communication modes. That is, the full-duplex mode refers to bidirectional signal transmission at the same time.

It should be noted that a network full-duplex mode refers to that a network side device is a full-duplex mode and a UE side is a half-duplex mode. A UE full-duplex mode refers to that a network side device is a full-duplex mode and a UE side is a full-duplex mode. It can be understood that the network full-duplex mode may achieve objectives of enhancing coverage, reducing a transmission latency, and improving resource utilization efficiency. However, the UE full-duplex mode may improve a DL (UL) throughput while obtaining the above gains.

It should be noted that when the UE side is in a half-duplex mode, the UE can receive only a DL or send a UL signal or channel in one time domain unit. When the UE side is in a full-duplex mod, the UE may receive a DL and send a UL signal or channel simultaneously in one time domain unit.

4. Guard band (Guard Band, GB): Generally, a guard band needs to be reserved between UL transmission and DL transmission, for example, a GB is reserved to achieve frequency isolation and reduce self-interference. Generally, a self-interference cancellation capability of the UE is less than that of the network side device. Therefore, for simultaneous sending and reception on the UE side, a reserved GB needs to be greater than a reserved GB of the network side device, that is, more physical resource blocks (Physical RB, PRB) need to be reserved as a guard band.

For example, when the network side device performs data transmission by using at least two of a UL subband, a DL subband, and a GB, the network side device may receive a UL channel or signal of the UE in a UL subband, and the network side device may send a DL channel or signal to the UE in a DL subband. DL sending causes self-interference to UL reception. Alternatively, when the UE performs data transmission by using at least two of a UL subband, a DL subband, and a GB, UL sending of the UE may cause self-interference to DL reception.

It can be understood that capabilities of different UE are different, and therefore different GBs need to be reserved.

5. A flexible time domain unit is a time domain unit that may be used for DL transmission or UL transmission.

With reference to the accompanying drawings, the following describes in detail a channel repetition transmission method and apparatus, UE, a network side device, and a storage medium provided in the embodiments of this application by using some embodiments and application scenarios thereof.

The channel repetition transmission method and apparatus, the UE, the network side device, and the storage medium provided in the embodiments of this application may be applied to a scenario of physical uplink channel repetition transmission. The physical uplink channel repetition transmission may include a scenario of a special PUSCH (special PUSCH) and a scenario of physical uplink control channel (Physical Uplink Control Channel, PUCCH) repetition transmission. For the special PUSCH, the special PUSCH may include but is not limited to a message (Message, Msg) A PUSCH, a Msg3 PUSCH, PUSCH repetition transmission scheduled by RAR in contention-based random access, PUSCH repetition transmission scheduled by RAR in contention free random access (PUSCH scheduled by RAR in Contention Free Random Access), a Msg5 PUSCH, any other PUSCH transmission before a radio resource control (Radio Resource Control, RRC) connection, and any other PUSCH transmission before a UE capability report is received. For a PUCCH, the PUCCH repetition transmission may include but is not limited to: a special PUCCH configured with only a common PUCCH resource without a dedicated PUCCH resource, such as a PUCCH carrying an ACK response for successfully receiving a Msg4 message.

It should be noted that the Msg5 PUSCH may be a PUSCH scheduled by the network for the UE to send an RRC setup completion message.

With development of communication technologies, future mobile communication systems need to adapt to more diversified scenarios and service requirements, such as eMBB, URLLC, and mMTC. These scenarios impose requirements on the systems for high reliability, low latency, high bandwidth, and wide coverage. In related technologies, subband non-overlapping full-duplex (Subbands non-overlapping Full duplex) may be employed to improve a transmission latency and enhanced coverage during data transmission between the UE and the network side device.

Specifically, for a DL slot (slot), for example, a DL slot configured through time division duplex (Time Division Duplex, TDD)-UL-DL-configuration common (Configuration Common) or a DL slot configured through TDD-UL-DL-configuration dedicated (Configuration Dedicated), the network side device may configure a DL bandwidth Part (Bandwidth Part, BWP) for the UE. For example, as shown in FIG. 2 (A), the network side device may configure a DL BWP, that is, a DL slot 1, for the UE; or the network side device may configure a DL BWP and a UL subband, that is, a DL slot 2, for the UE.

For a UL slot, for example, a UL slot configured through TDD-UL-DL-configuration common or a UL slot configured through TDD-UL-DL-configuration dedicated, the network side device may configure a UL BWP for the UE. For example, as shown in FIG. 2 (B), the network side device may configure a UL BWP, that is, a UL slot 3, for the UE; or the network side device may configure a UL BWP and a DL subband, that is, a UL slot 4, for the UE.

Generally, one full-duplex subband (SubBand Full Duplex, SBFD) includes one resource block (Resource Block, RB) or one consecutive RB set with a same transmission direction. A time domain unit such as a slot or a symbol operated by the network side device by using the SBFD may be referred to as an SBFD time domain unit.

For the 3GPP Release 15 (Release 15, Rel-15), the network side device and the UE can only send data or receive data in one time domain unit. For the 3GPP Release 18 (Release 18, Rel-18), the network side device may perform data transmission in a full-duplex mode, that is, the network side device may simultaneously send and receive data, and the UE side can use only a half-duplex mod, that is, can only send data or receive data in one time domain unit.

In a full-duplex case on the UE side, the network side device and the UE may simultaneously send and receive data. However, because simultaneous UL reception and DL sending may cause self-interference, to ensure transmission in an affected direction, the UE needs to have a self-interference cancellation capability, such as reserving a guard band between a DL frequency band and a UL frequency band. In this way, although self-interference generated by simultaneous data sending and reception can be eliminated, a throughput of the UE is reduced.

Currently, the UE can only send an RAR-PUSCH in a semi-statically configured UL symbol or flexible symbol. In a network configuration dominated by a DL service such as a TDD uplink-downlink configuration of a DDDSU, time domain resources for the UE to send the RAR-PUSCH are restricted. This adversely affects a transmission latency and coverage, resulting in a prolonged transmission latency and a poor effect of enhanced coverage.

In the channel repetition transmission method and apparatus, the UE, the network side device, and the storage medium provided in the embodiments of this application, a subband used by the UE for PUSCH repetition transmission may be configured through a semi-static configuration configured by the network side device. Therefore, the UE may perform data transmission by using an available time-frequency resource determined according to the semi-static configuration, thereby improving utilization efficiency of a transmission resource of the UE, reducing a transmission latency of the UE, and improving an effect of enhanced coverage.

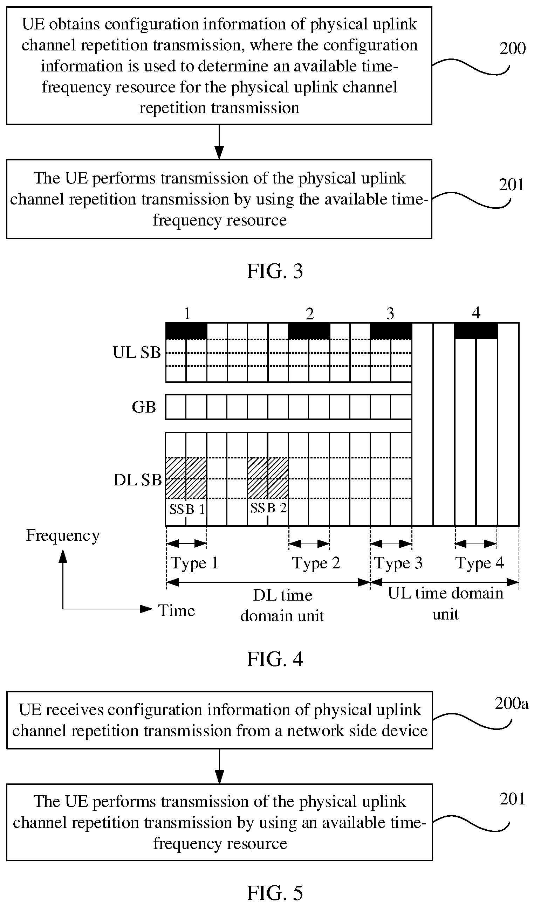

FIG. 3 is a schematic flowchart of a channel repetition transmission method according to an embodiment of this application. As shown in FIG. 3, the call method may include the following step 200 and step 201.

Step 200: UE obtains configuration information of physical uplink channel repetition transmission.

The configuration information is used to determine an available time-frequency resource for the physical uplink channel repetition transmission.

Step 201: The UE performs transmission of the physical uplink channel repetition transmission by using the available time-frequency resource.

The available time-frequency resource includes at least one of the following: a UL subband in a DL time domain unit in which there is a synchronization signal and physical broadcast channel block SSB; a UL subband in a DL time domain unit in which there is a common DL channel; a UL subband in a DL time domain unit in which there is no SSB or common DL channel; a UL subband in a UL time domain unit; a UL time domain unit; and a flexible time domain unit. Optionally, a time-frequency resource of a UL subband may be configured by using cell-level signalling.

In this embodiment of this application, the foregoing physical uplink channel repetition transmission may be PUSCH repetition transmission or PUCCH repetition transmission.

Optionally, in this embodiment of this application, the configuration information of the physical uplink channel repetition transmission may be a parameter of a semi-static configuration configured by a network side device.

Optionally, in this embodiment of this application, the UE may determine the available time-frequency resource for the physical uplink channel repetition transmission based on the parameter of the semi-static configuration. The semi-static configuration may be used to configure a subband for repetition transmission for the UE.

For example, the UE may determine, based on the parameter of the semi-static configuration, a subband used to perform the physical uplink channel repetition transmission.

It can be understood that the physical uplink channel repetition transmission can improve reliability of a transmission resource of the UE.

Optionally, in this embodiment of this application, a quantity of times of the physical uplink channel repetition transmission may be a positive integer greater than or equal to 1.

It should be noted that the configuration information of the physical uplink channel repetition transmission may instruct the network side device to provide, in advance, a parameter required for data transmission for the UE, instead of dynamically sending the parameter.

Optionally, in this embodiment of this application, that the UE performs transmission of the physical uplink channel repetition transmission by using the available time-frequency resource may be represented as: the UE may simultaneously transmit UL and DL data in one time domain unit by using the available time-frequency resource.

Optionally, in this embodiment of this application, the network side device may configure a specific preamble (Preamble) for the UE, and use the preamble as a physical uplink channel repetition transmission request. When determining that the physical uplink channel repetition transmission needs to be performed, the UE may request the physical uplink channel repetition transmission by using these specific preambles.

Optionally, in this embodiment of this application, the preamble may be located at a random access occasion (Rach Occasion, RO) of an SBFD time domain unit or an RO of a UL time domain unit. This is not specifically limited in this embodiment of this application.

Optionally, in this embodiment of this application, the available time-frequency resource may include at least one of the following: a time-frequency resource configured in a UL subband in a DL time domain unit in which there is an SSB; a time-frequency resource configured in a UL subband in a DL time domain unit in which there is a common DL channel; a time-frequency resource configured in a UL subband in a DL time domain unit in which there is no SSB or common DL channel; a time-frequency resource configured in a UL subband in a UL time domain unit; and a time-frequency resource configured in a UL time domain unit.

Optionally, the available time-frequency resource may alternatively include a non-DL subband in a flexible time domain unit and a UL subband of a flexible time domain unit. For simplicity, no further details are provided herein.

Optionally, in this embodiment of this application, for a type of an SBFD time domain unit, the network side device may configure at least one type of the following frequency-domain sizes: a UL subband, a DL subband, a GB of the network side device, and a GB of the UE side.

It can be understood that a type of a time domain unit used for special PUSCH repetition transmission may include at least one of the following types: a DL symbol configured with a UL subband; a UL symbol configured with a DL subband; and a UL symbol.

Optionally, in this embodiment of this application, for the configured special PUSCH repetition transmission, as shown in FIG. 4, the available time-frequency resource includes the following two types of UL resources: a UL subband in a UL time domain unit or a DL time domain unit, for example, a type 1, a type 2, and a type 3 shown in FIG. 4; and a UL time domain unit with no DL subband configured, for example, a type 4 shown in FIG. 4.

Further, the available time-frequency resource configured for the special PUSCH repetition transmission may be further classified according to whether the resource overlaps with an SSB or a common DL channel: a time-frequency resource configured in a UL subband in a DL time domain unit in which there is an SSB and a time-frequency resource configured in a UL subband in a DL time domain unit in which there is a common DL channel, as shown in 1 in FIG. 4. In this case, a UL resource overlaps with an SSB or a common DL channel in time domain. Uplink sending of the UE may interfere with reception of an SSB of other UE, that is, cross-link interference is generated. In addition, if the UE measures or decodes the common DL channel by using the SSB, self-interference is also generated.

A time-frequency resource configured in a UL subband in a DL time domain unit in which there is no SSB or common DL channel is shown in 2 in FIG. 4. In this case, a UL resource does not overlap an SSB or a common DL channel in time domain. Uplink sending of the UE may interfere with reception of a DL channel or signal of other UE, such as a PDCCH, a PDSCH, and a reference signal (Channel State Information-Reference Signal, CSI-RS).

A time-frequency resource configured in a UL subband in a UL time domain unit is shown in 3 in FIG. 4. An interference case is similar to that of the time-frequency resource configured in the UL subband in the DL time domain unit in which there is no SSB or common DL channel. To avoid repetition, details are not described herein again.

A time-frequency resource configured in a UL time domain unit is shown in 4 in FIG. 4. In this case, there is no cross-link interference or self-interference in uplink sending of the UE.

In this way, the UE may perform data transmission by using the available time-frequency resource determined according to the semi-static configuration while avoiding interference as much as possible, thereby improving utilization efficiency of a transmission resource of the UE, reducing a transmission latency of the UE, and improving an effect of enhanced coverage.

According to the channel repetition transmission method provided in this embodiment of this application, because the available time-frequency resource for the physical uplink channel repetition transmission may be determined by using the configuration information of the physical uplink channel repetition transmission, the UE may perform data transmission by using the available time-frequency resource determined according to the configuration information, thereby improving utilization efficiency of a transmission resource of the UE, reducing a transmission latency of the UE, and improving an effect of enhanced coverage.

Optionally, in this embodiment of this application, with reference to FIG. 3, as shown in FIG. 5, the foregoing step 200 may include the following step 200a.

Step 200a: The UE receives the configuration information of the physical uplink channel repetition transmission from a network side device.

Optionally, in this embodiment of this application, the UE may receive the configuration information of the physical uplink channel repetition transmission from the network side device, to determine the available time-frequency resource, so as to perform transmission of the physical uplink channel repetition transmission by using the available time-frequency resource.

For example, assuming that the network side device indicates that a quantity of times of special PUSCH repetition transmission is K, the UE may perform K times of transmission of the physical uplink channel repetition transmission by using the available time-frequency resource.

Optionally, in this embodiment of this application, if a time-frequency resource is unusable in a process of the physical uplink channel repetition transmission, the UE may continue to search for a next usable time-frequency resource for transmission.

Optionally, in this embodiment of this application, the UE may receive, from common or dedicated signalling, the parameter that is of the semi-static configuration and sent by the network side device.

For example, the UE may receive, from a system information block (System Information Block, SIB), the configuration information that is of the physical uplink channel repetition transmission and sent by the network side device.

For example, the configuration information of the physical uplink channel repetition transmission is the parameter of the semi-static configuration. The UE may receive, by using an RRC connection, the parameter that is of the semi-static configuration and sent by the network side device.

In this way, after receiving the configuration information that is of the physical uplink channel repetition transmission and sent by the network side device, the UE may determine the available time-frequency resource according to the parameter of the semi-static configuration, so as to perform data transmission, thereby improving utilization efficiency of a transmission resource of the UE, reducing a transmission latency of the UE, and improving an effect of enhanced coverage.

Optionally, in this embodiment of this application, the configuration information may include at least one of the following: a UL subband in a DL time domain unit; a UL subband in a UL time domain unit; a time-frequency resource that is in an available UL subband configured by the network side device; a transmit power threshold configured by the network side device for different UL resource types or UL resources; a first frequency domain distance threshold; a second frequency domain distance threshold; a time interval threshold; a UL time domain unit; and a time-frequency resource that is in a flexible time domain unit and determined according to a predefined rule.

The predefined rule may include at least one of the following: in a case that a DL subband is configured and no UL subband is configured in a flexible time domain unit, a time-frequency resource outside the DL subband is determined as an available time-frequency resource; in a case that a UL subband is configured in a flexible time domain unit and a transmit power in the UL subband is less than a first transmit power threshold, a time-frequency resource in the UL subband configured in the flexible time domain unit is determined as an available time-frequency resource; and in a case that no DL subband is configured and no UL subband is configured in a flexible time domain unit, a time domain unit with transmit power less than a second transmit power threshold is determined as an available time-frequency resource.

Optionally, in this embodiment of this application, in a case that the configuration information includes at least one of a UL subband in a DL time domain unit, a UL subband in a UL time domain unit, and a UL time domain unit, the UE may directly perform the physical uplink channel repetition transmission by using the UL subband in the DL time domain unit, the UL subband in the UL time domain unit, or the UL time domain unit.

Optionally, in this embodiment of this application, the physical uplink channel may include a transmit power threshold.

Optionally, in this embodiment of this application, before the foregoing step 201, the channel repetition transmission method provided in this embodiment of this application may further include the following step 203.

Step 203: In a case that a transmit power in a first UL subband is less than or equal to a transmit power threshold corresponding to the first UL subband, the UE determines that a time-frequency resource configured in the first UL subband is the available time-frequency resource.

The first UL subband may include at least one UL subband in a time domain unit of the UE.

Optionally, in this embodiment of this application, the network side device may configure different transmit power thresholds for different UL resource types or UL resources, so that the UE can determine the available time-frequency resource for the special PUSCH repetition transmission according to the transmit power thresholds.

Optionally, in this embodiment of this application, if a UL transmit power in a UL subband is high, high cross-link interference to a synchronization signal and physical broadcast channel block (Synchronization Signal and Physical Broadcast Channel Block, SSB) or a DL signal of other UE is generated. This can adversely affect reception of information such as an SSB, another critical DL control channel, and a DL data channel by other UE, and may even impact access and normal communication of other UE. In addition, if the UE also performs measurement and reception by using an SSB or a DL channel, strong self-interference is also generated. Therefore, the UL transmit power in the UL subband may be controlled by setting a transmit power threshold of a UL resource type, to avoid cross-link interference and self-interference.

It can be understood that if a transmit power of the special PUSCH repetition transmission is less than the transmit power threshold of the UL resource type, the UE may determine that a time-frequency resource in which the UL resource is located is an available time-frequency resource. If a transmit power of the special PUSCH repetition transmission is greater than the transmit power threshold of the UL resource type, the UE may determine that a time-frequency resource in which the UL resource is located is an unusable time-frequency resource.

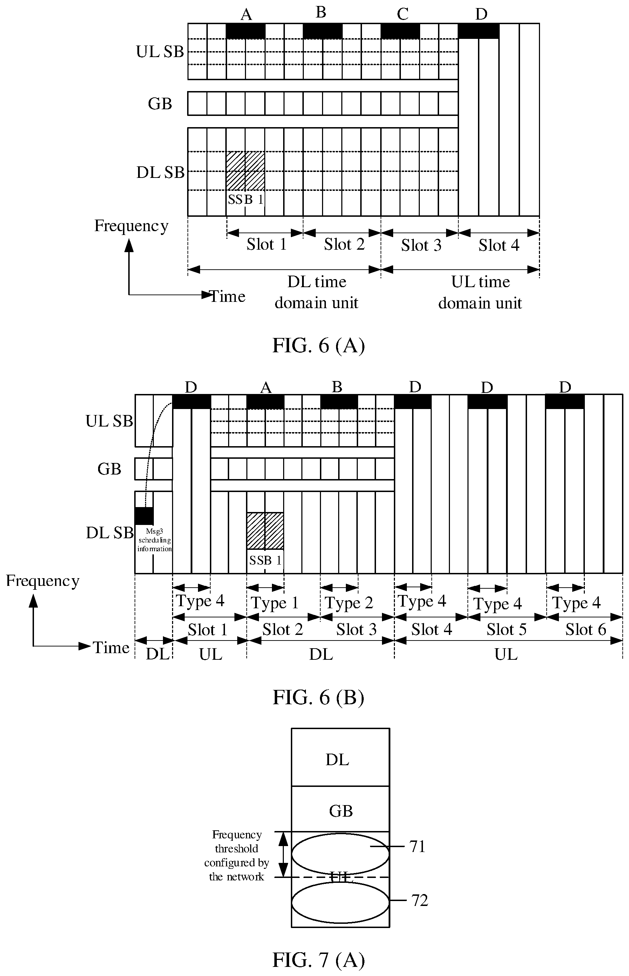

For example, UL resource types include a UL resource type 1, a UL resource type 2, a UL resource type 3, and a UL resource type 4; and a transmit power threshold of the UL resource type 1 is A, a transmit power threshold of the UL resource type 2 is B, a transmit power threshold of the UL resource type 3 is C, and a transmit power threshold of the UL resource type 4 is D. It is assumed that A<B<C<D or A<B=C<D, as shown in FIG. 6 (A) and FIG. 6 (B).

If the transmit power threshold configured by the network side device is less than A, all four slots shown in FIG. 6 (A) are usable slots, and the UE may perform repetition transmission by using a time-frequency resource in which the four slots are located.

If the transmit power threshold configured by the network side device is greater than B and less than D, a UL subband in which a slot 2 and a slot 3 shown in FIG. 6 (B) are located is an unusable time-frequency resource. The UE may determine the available time-frequency resource for the physical uplink channel repetition transmission from a next time-frequency resource, that is, determine that a UL resource in which a slot 4, a slot 5, and a slot 6 shown in FIG. 6 (B) are located is an available time-frequency resource, so as to perform repetition transmission.

It should be noted that a time domain resource and a frequency domain resource for RAR-PUSCH repetition transmission in each time domain unit may be configured by the network side device. Transmission is performed by using a same time-frequency resource.

In this way, different transmit power thresholds may be configured for special PUSCH repetition transmission of a UL subband, so that the UE performs the special PUSCH repetition transmission by using an available time-frequency resource with transmit power less than the transmit power threshold, thereby reducing cross-link interference and self-interference.

Optionally, in this embodiment of this application, the configuration information may include the first frequency domain distance threshold.

Optionally, in this embodiment of this application, before the foregoing step 201, the channel repetition transmission method provided in this embodiment of this application may further include the following step 204.

Step 204: In a case that a frequency domain distance between a second UL subband in a first time domain unit and a first GB in the first time domain unit is greater than or equal to the first frequency domain distance threshold, the UE determines that a time-frequency resource configured in the second UL subband is the available time-frequency resource.

Optionally, in this embodiment of this application, the first time domain unit may be any time domain unit of the UE.

Optionally, in this embodiment of this application, the first GB is a GB in the first time domain unit.

Optionally, in this embodiment of this application, the second UL subband is a UL subband in the first time domain unit. The second UL subband may be the same as or different from the first UL subband.

Optionally, in this embodiment of this application, the network side device may configure the first frequency domain distance threshold between the second UL subband in the first time domain unit and the first GB in the first time domain unit by using the configuration information, so that the UE does not perform the physical uplink channel repetition transmission by using a UL subband that is close to the first GB in the first time domain unit, thereby avoiding interference during full-duplex transmission on the UE side.

For example, as shown in FIG. 7 (A), if a frequency domain distance between a UL subband 71 and a GB is less than a first frequency domain distance threshold, the UE may determine that a time-frequency resource in the UL subband 71 is an available time-frequency resource; and if a frequency domain distance between a UL subband 72 and a GB is greater than or equal to the first frequency domain distance threshold, the UE may determine that a time-frequency resource in the UL subband 72 is an available time-frequency resource.

In this way, through the first frequency domain distance threshold configured by the network side device, an available time-frequency resource used by the UE may be far from a GB (or a DL subband) in the same time domain unit, thereby reducing interference during full-duplex transmission on the UE side and reducing cross-link interference to other UE.

If a frequency domain distance between partial resources for special PUSCH repetition transmission and a GB is less than the first frequency domain distance threshold, the resource is an unusable time-frequency resource.

Optionally, in this embodiment of this application, the configuration information may include the second frequency domain distance threshold.

Optionally, in this embodiment of this application, before the foregoing step 201, the channel repetition transmission method provided in this embodiment of this application may further include the following step 205.

Step 205: In a case that a frequency domain distance between a third UL subband in a second time domain unit and a first DL subband in the second time domain unit is greater than or equal to the second frequency domain distance threshold, the UE determines that a time-frequency resource configured in the third UL subband is the available time-frequency resource.

Optionally, in this embodiment of this application, the second time domain unit may be any time domain unit of the UE.

Optionally, in this embodiment of this application, the second time domain unit may be the same as or different from the first time domain unit.

Optionally, in this embodiment of this application, the third UL subband may be the same as or different from the first UL subband.

Optionally, in this embodiment of this application, the network side device may configure the second frequency domain distance threshold between the third UL subband in the second time domain unit and the first DL subband in the second time domain unit through the semi-static configuration, so that the UE does not perform the physical uplink channel repetition transmission by using a UL subband that is close to the first DL subband in the second time domain unit, thereby avoiding interference during full-duplex transmission on the UE side and reducing cross-link interference to other UE.

In this way, through the second frequency domain distance threshold configured by the network side device, an available time-frequency resource used by the UE may be far from a DL subband in the same time domain unit, thereby reducing interference during full-duplex transmission on the UE side and reducing cross-link interference to other UE.

Optionally, in this embodiment of this application, the configuration information may include the time interval threshold.

Optionally, in this embodiment of this application, before the foregoing step 201, the channel repetition transmission method provided in this embodiment of this application may further include the following step 206.

Step 206: In a case that a time interval between a fourth UL subband in a third time domain unit and a first downlink signal in the third time domain unit is greater than or equal to the time interval threshold, the UE determines that a time-frequency resource configured in the fourth UL subband is the available time-frequency resource.

Optionally, in this embodiment of this application, the first downlink signal may include at least one of the following: a synchronization signal; a broadcast signal; a system information channel; and a control channel for scheduling system information.

Optionally, in this embodiment of this application, the third time domain unit may be any time domain unit of the UE.

Optionally, in this embodiment of this application, the third time domain unit may be the same as or different from the first time domain unit.

Optionally, in this embodiment of this application, the fourth UL subband may be the same as or different from the first UL subband.

Optionally, in this embodiment of this application, if at least partial downlink signals are sent on a bandwidth of a UL subband in a time domain unit, the UE may determine that a time-frequency resource configured in the UL subband is an unusable time-frequency resource; or the UE determines this as an incorrect configuration, and does not perform repetition transmission by using this UL subband.

Optionally, in this embodiment of this application, the system information channel may include but is not limited to a SIB1 physical downlink shared channel (Physical Downlink Shared Channel, PDSCH).

Optionally, in this embodiment of this application, the control channel for scheduling the system information may include but is not limited to a physical downlink control channel (Physical Downlink Control Channel, PDCCH) for scheduling the SIB1 PDSCH.

Optionally, in this embodiment of this application, the time interval between the fourth UL subband and the downlink signal may include a time interval between a start symbol of the fourth UL subband and the first downlink signal or a time interval between an end symbol of the fourth UL subband and the first downlink signal.

In this way, through a time interval threshold that is between a UL subband and a downlink signal in a same time domain unit and configured by the network side device, there is a sufficient UL and DL switching time for half-duplex UE.

Optionally, in this embodiment of this application, the predefined rule may include at least one of the following: in a case that a DL subband is configured and no UL subband is configured in a flexible time domain unit, a time-frequency resource outside the DL subband is determined as an available time-frequency resource; in a case that a UL subband is configured in a flexible time domain unit and a transmit power in the UL subband is less than a first transmit power threshold, a time-frequency resource in the UL subband configured in the flexible time domain unit is determined as an available time-frequency resource; and in a case that no DL subband is configured and no UL subband is configured in a flexible time domain unit, a time domain unit with transmit power less than a second transmit power threshold is determined as an available time-frequency resource.

Optionally, in this embodiment of this application, the UE may determine the available time-frequency resource in the flexible time domain unit according to the predefined rule.

For example, if a DL subband is configured and no UL subband is configured in a flexible time domain unit, the UE may determine that a time-frequency resource outside the DL subband is an available time-frequency resource, and the UE uses a transmit power threshold of the time-frequency resource outside the DL subband as a transmit power threshold B or C of a UL time domain unit. If a UL subband is configured in a flexible time domain unit and a transmit power in the UL subband is greater than or equal to the transmit power threshold B or C, the UE may determine that a time-frequency resource in the UL subband configured in the flexible time domain unit is an available time-frequency resource. If no DL subband is configured and no UL subband is configured in a flexible time domain unit, the UE may determine that a time domain unit with transmit power less than a transmit power threshold D is an available time-frequency resource.

Optionally, in this embodiment of this application, the first transmit power threshold and the second transmit power threshold may be configured by the network side device.

Optionally, in this embodiment of this application, the first transmit power threshold may be the same as or different from the second transmit power threshold.

In this way, the UE may perform repetition transmission by using the available time-frequency resource in the flexible time domain unit according to the predefined rule, thereby improving utilization efficiency of a transmission resource of the UE, reducing a transmission latency of the UE, and improving an effect of enhanced coverage.

Optionally, in this embodiment of this application, the configuration information may be used to indicate that at least one of the following is an unusable time-frequency resource: a time-frequency resource in a semi-statically configured DL time domain unit; a time-frequency resource in a semi-statically configured DL subband; a time-frequency resource in a semi-statically configured full-duplex GB of the network side device; and a time-frequency resource in a semi-statically configured full-duplex GB of the terminal side device.

Optionally, in this embodiment of this application, a time-frequency resource in a DL subband in the physical uplink channel repetition transmission may alternatively include a DL subband in a flexible time domain unit.

Optionally, in this embodiment of this application, the UE may determine an unusable time-frequency resource in the physical uplink channel repetition transmission according to the configuration information that is of the physical uplink channel repetition transmission and sent by the network side device.

It can be understood that, for time-frequency resources of different symbol types, if the time-frequency resource meets the predefined rule or is a time-frequency resource in an available UL subband configured by the network side device, the UE may also determine the time-frequency resource as an available time-frequency resource.

For example, assuming that one time-frequency resource occupies a UL subband and a UL symbol and both the UL subband and the UL symbol are usable time-frequency resources, the UE may determine the one time-frequency resource as an available time-frequency resource for transmitting the physical uplink channel repetition transmission.

Optionally, in this embodiment of this application, the network side device may further determine another time-frequency resource as an unusable time-frequency resource by using the configuration information of the physical uplink channel repetition transmission, to ensure reliability of an available time-frequency resource determined by the UE.

For example, the network side device may configure a UL resource type used for special PUSCH repetition transmission, that is, indicate whether one UL resource type is used for the special PUSCH repetition transmission.

For example, as shown in FIG. 4, the network side device may configure UL resource types for the special PUSCH repetition transmission as a type 2, a type 3, and a type 4 using a bitmap (bitmap). A UL subband of the type 1 is an unusable time-frequency resource. The UE does not perform the special PUSCH repetition transmission by using the UL resource type of the type 1.

For example, the network side device may further configure some UL subbands or UL time domain units that do not allow transmission of a special PUSCH.

Optionally, in this embodiment of this application, in a case that a frequency domain resource for the physical uplink channel repetition transmission exceeds a frequency domain resource size of a UL subband, the network side device may also configure the UL subband as an unusable time-frequency resource. In this case, the UE may utilize puncturing or rate matching to match a frequency domain resource of a UL subband capable of carrying the physical uplink channel repetition transmission, and then determine the UL subband as an available time-frequency resource.

In this way, the UE may determine an unusable time-frequency resource according to the configuration information that is of the physical uplink channel repetition transmission and sent by the network side device, to ensure reliability of an available time-frequency resource determined by the UE.

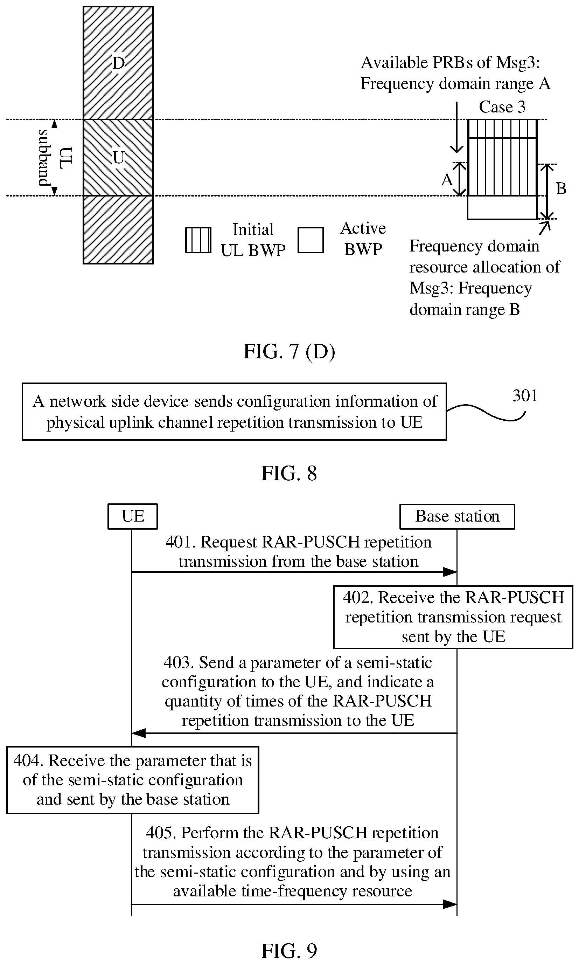

FIG. 8 is a schematic flowchart of a channel repetition transmission method according to an embodiment of this application. As shown in FIG. 8, the channel repetition transmission method may include the following step 301.

Step 301: A network side device sends configuration information of physical uplink channel repetition transmission to UE.

The configuration information is used to determine an available time-frequency resource for the physical uplink channel repetition transmission.

In this embodiment of this application, the available time-frequency resource may include at least one of the following: a UL subband in a DL time domain unit in which there is a synchronization signal and physical broadcast channel block SSB; a UL subband in a DL time domain unit in which there is a common DL channel; a UL subband in a DL time domain unit in which there is no SSB or common DL channel; a UL subband in a UL time domain unit; a UL time domain unit; and a flexible time domain unit.

Optionally, in this embodiment of this application, the network side device may send the configuration information of the physical uplink channel repetition transmission to the UE by using common signalling or a dedicated channel such as a SIB or an RRC connection.

Optionally, in this embodiment of this application, the configuration information may include at least one of the following:
a UL subband in a downlink DL time domain unit;
a UL subband in a UL time domain unit;
a time-frequency resource that is in an available UL subband configured by the network side device;
a transmit power threshold configured by the network side device for different UL resource types or UL resources;
a first frequency domain distance threshold;
a second frequency domain distance threshold;
a time interval threshold;
a UL time domain unit; and
a time-frequency resource that is in a flexible time domain unit and determined according to a predefined rule, where
the predefined rule may include at least one of the following:
   in a case that a DL subband is configured and no UL subband is configured in a flexible time domain unit, a time-frequency resource outside the DL subband is determined as an available time-frequency resource;
   in a case that a UL subband is configured in a flexible time domain unit and a transmit power in the UL subband is less than a first transmit power threshold, a time-frequency resource in the UL subband configured in the flexible time domain unit is determined as an available time-frequency resource; and
   in a case that no DL subband is configured and no UL subband is configured in a flexible time domain unit, a time domain unit with transmit power less than a second transmit power threshold is determined as an available time-frequency resource.

It should be noted that for specific description of the parameter of the semi-static configuration, refer to the foregoing detailed descriptions. To avoid repetition, details are not described herein again.

According to the channel repetition transmission method provided in this embodiment of this application, because an available time-frequency resource used by UE for physical uplink channel repetition transmission may be configured by using configuration information that is for the physical uplink channel repetition transmission and sent by a network side device, the UE may perform data transmission by using the available time-frequency resource determined according to the configuration information, hereby improving utilization efficiency of a transmission resource of the UE, reducing a transmission latency of the UE, and improving an effect of enhanced coverage.

The foregoing method embodiments or the possible implementations in the method embodiments may be separately executed, or any two or more thereof may be executed together. This may be specifically determined according to an actual use requirement, and is not limited in the embodiments of this application.

The following uses an example in which a network side device is a base station, physical uplink channel repetition transmission is RAR-PUSCH repetition transmission, and configuration information of the physical uplink channel repetition transmission is a parameter of a semi-static configuration to describe the channel repetition transmission method provided in this embodiment of this application.

As shown in FIG. 9, the channel repetition transmission method provided in this embodiment of this application includes the following steps 401 to 405.

Step 401: UE requests RAR-PUSCH repetition transmission from a base station.

Optionally, in this embodiment of this application, the UE may request the RAR-PUSCH repetition transmission from the base station by using a special preamble or RO.

For example, the UE may send a specific preamble at a configured physical random access channel (Physical Random Access Channel, PRACH) transmission occasion when a reference signal received power (Reference Signal Receiving Power, RSRP) value of a downlink path loss reference is less than an RSRP threshold.

Step 402: The base station receives the RAR-PUSCH repetition transmission request sent by the UE.

Step 403: The base station sends a parameter of a semi-static configuration to the UE, and indicates a quantity of times of the RAR-PUSCH repetition transmission to the UE.

Optionally, in this embodiment of this application, after receiving the request sent by the UE, the base station may schedule the RAR-PUSCH repetition transmission.

For example, when the base station detects the specific preamble or RO, it may be determined that the UE sends the RAR-PUSCH repetition transmission request. In this case, the base station may determine whether to schedule the RAR-PUSCH repetition transmission, and indicate the quantity of times of the RAR-PUSCH repetition transmission by using x bits (bit) of a predefined field in downlink control information (Downlink Control Information, DCI) or highest-order x bits of an existing information field, such as two bits in a modulation and coding scheme (Modulation and Coding Scheme, MCS) information field.

Step 404: The UE receives the parameter that is of the semi-static configuration and sent by the base station.

Step 405: The UE performs the RAR-PUSCH repetition transmission according to the parameter of the semi-static configuration and by using an available time-frequency resource.

In this way, because the available time-frequency resource for the physical uplink channel repetition transmission may be determined by using the configuration information of the physical uplink channel repetition transmission, the UE may perform data transmission by using the available time-frequency resource determined according to the configuration information, thereby improving utilization efficiency of a transmission resource of the UE, reducing a transmission latency of the UE, and improving an effect of enhanced coverage.

The channel repetition transmission method provided in the embodiments of this application may be executed by a channel repetition transmission apparatus. In the embodiments of this application, an example in which the channel repetition transmission apparatus executes the channel repetition transmission method is used to describe the channel repetition transmission apparatus provided in the embodiments of this application.

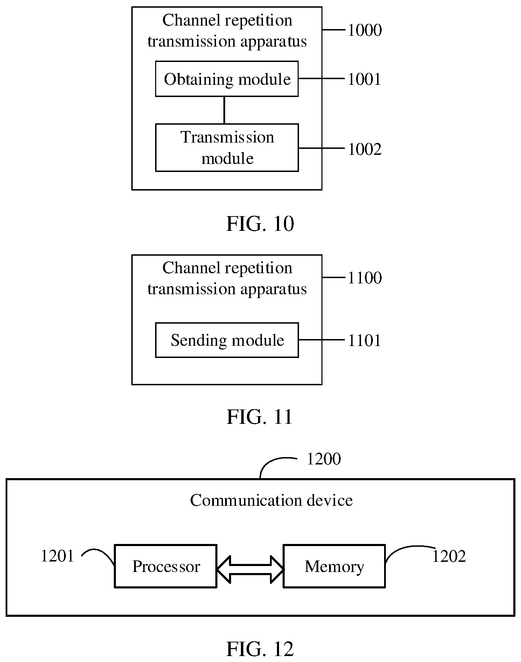

An embodiment of this application provides a channel repetition transmission apparatus 1000. As shown in FIG. 10, the channel repetition transmission apparatus 1000 includes an obtaining module 1001 and a transmission module 1002.

The obtaining module 1001 is configured to obtain configuration information of physical uplink channel repetition transmission, where the configuration information is used to determine an available time-frequency resource for the physical uplink channel repetition transmission; and the transmission module 1002 is configured to perform transmission of the physical uplink channel repetition transmission by using the available time-frequency resource, where the available time-frequency resource includes at least one of the following: a UL subband in a DL time domain unit in which there is a synchronization signal and physical broadcast channel block SSB; a UL subband in a DL time domain unit in which there is a common DL channel; a UL subband in a DL time domain unit in which there is no SSB or common DL channel; a UL subband in a UL time domain unit; a UL time domain unit; and a flexible time domain unit.

In a possible implementation, the obtaining module 1001 is specifically configured to receive the configuration information of the physical uplink channel repetition transmission from a network side device.

In a possible implementation, the configuration information includes at least one of the following:
a UL subband in a downlink DL time domain unit;
a UL subband in a UL time domain unit;
a time-frequency resource that is in an available UL subband configured by the network side device;
a transmit power threshold configured by the network side device for different UL resource types or UL resources;
a first frequency domain distance threshold;
a second frequency domain distance threshold;
a time interval threshold;
a UL time domain unit; and
a time-frequency resource that is in a flexible time domain unit and determined according to a predefined rule, where
the predefined rule includes at least one of the following:
   in a case that a DL subband is configured and no UL subband is configured in a flexible time domain unit, a time-frequency resource outside the DL subband is determined as an available time-frequency resource;
   in a case that a UL subband is configured in a flexible time domain unit and a transmit power in the UL subband is less than a first transmit power threshold, a time-frequency resource in the UL subband configured in the flexible time domain unit is determined as an available time-frequency resource; and
   in a case that no DL subband is configured and no UL subband is configured in a flexible time domain unit, a time domain unit with transmit power less than a second transmit power threshold is determined as an available time-frequency resource.

In a possible implementation, the configuration information includes the transmit power threshold; and
the apparatus further includes a determining module, where
the determining module is configured to: before the transmission module 1002 transmits the physical uplink channel repetition transmission by using the available time-frequency resource, in a case that a transmit power in a first UL subband is less than or equal to a transmit power threshold corresponding to the first UL subband, determine that a time-frequency resource configured in the first UL subband is the available time-frequency resource, where the first UL subband includes at least one UL subband in a time domain unit of the UE.

In a possible implementation, the configuration information includes the first frequency domain distance threshold; and
the determining module is configured to: before the transmission module 1002 transmits the physical uplink channel repetition transmission by using the available time-frequency resource, in a case that a frequency domain distance between a second UL subband in a first time domain unit and a first GB in the first time domain unit is greater than or equal to the first frequency domain distance threshold, determine that a time-frequency resource configured in the second UL subband is the available time-frequency resource.

In a possible implementation, the configuration information includes the second frequency domain distance threshold; and
the determining module is configured to: before the transmission module 1002 transmits the physical uplink channel repetition transmission by using the available time-frequency resource, in a case that a frequency domain distance between a third UL subband in a second time domain unit and a first DL subband in the second time domain unit is greater than or equal to the second frequency domain distance threshold, determine that a time-frequency resource configured in the third UL subband is the available time-frequency resource.

In a possible implementation, the configuration information includes the time interval threshold; and
the determining module is configured to: before the transmission module 1002 performs transmission of the physical uplink channel repetition transmission by using the available time-frequency resource, in a case that a time interval between a fourth UL subband in a third time domain unit and a first downlink signal in the third time domain unit is greater than or equal to the time interval threshold, determine that a time-frequency resource configured in the fourth UL subband is the available time-frequency resource.

In a possible implementation, the time interval between the fourth UL subband and the downlink signal includes a time interval between a start symbol of the fourth UL subband and the first downlink signal or a time interval between an end symbol of the fourth UL subband and the first downlink signal.

In a possible implementation, the first downlink signal includes at least one of the following:
a synchronization signal;
a broadcast signal;
a system information channel; and
a control channel for scheduling system information.

An embodiment of this application provides a channel repetition transmission apparatus. Because an available time-frequency resource for physical uplink channel repetition transmission may be determined by using configuration information of the physical uplink channel repetition transmission, UE may perform data transmission by using the available time-frequency resource determined according to the configuration information, thereby improving utilization efficiency of a transmission resource of the UE, reducing a transmission latency of the UE, and improving an effect of enhanced coverage..

An embodiment of this application further provides a channel repetition transmission apparatus 1100. As shown in FIG. 11, the channel repetition transmission apparatus 1100 includes a sending module 1101.

The sending module 1101 is configured to send configuration information of physical uplink channel repetition transmission to UE, where the configuration information is used to determine an available time-frequency resource for the physical uplink channel repetition transmission, where the available time-frequency resource includes at least one of the following: a UL subband in a DL time domain unit in which there is a synchronization signal and physical broadcast channel block SSB; a UL subband in a DL time domain unit in which there is a common DL channel; a UL subband in a DL time domain unit in which there is no SSB or common DL channel; a UL subband in a UL time domain unit; a UL time domain unit; and a flexible time domain unit.

In a possible implementation, the configuration information includes at least one of the following:
a UL subband in a downlink DL time domain unit;
a UL subband in a UL time domain unit;
a time-frequency resource that is in an available UL subband configured by the network side device;
a transmit power threshold configured by the network side device for different UL resource types or UL resources;
a first frequency domain distance threshold;
a second frequency domain distance threshold;
a time interval threshold;
a UL time domain unit; and
a time-frequency resource that is in a flexible time domain unit and determined according to a predefined rule, where
the predefined rule includes at least one of the following:
   in a case that a DL subband is configured and no UL subband is configured in a flexible time domain unit, a time-frequency resource outside the DL subband is determined as an available time-frequency resource;
   in a case that a UL subband is configured in a flexible time domain unit and a transmit power in the UL subband is less than a first transmit power threshold, a time-frequency resource in the UL subband configured in the flexible time domain unit is determined as an available time-frequency resource; and
   in a case that no DL subband is configured and no UL subband is configured in a flexible time domain unit, a time domain unit with transmit power less than a second transmit power threshold is determined as an available time-frequency resource.

An embodiment of this application provides a channel repetition transmission apparatus. Because an available time-frequency resource used by UE for physical uplink channel repetition transmission may be configured by using configuration information that is for the physical uplink channel repetition transmission and sent by a network side device, the UE may perform data transmission by using the available time-frequency resource determined according to the configuration information, hereby improving utilization efficiency of a transmission resource of the UE, reducing a transmission latency of the UE, and improving an effect of enhanced coverage.

The channel repetition transmission apparatus in this embodiment of this application may be an electronic device, for example, an electronic device with an operating system, or a component in the electronic device, for example, an integrated circuit or a chip. The electronic device may be a terminal or another device other than the terminal. For example, the terminal may include but is not limited to the foregoing listed type of the UE 11. The another device may be a server, a network attached storage (Network Attached Storage, NAS), or the like. This is not specifically limited in this embodiment of this application.

The channel repetition transmission apparatus provided in this embodiment of this application can implement the processes implemented in the foregoing channel repetition transmission method embodiment, and achieve a same technical effect. To avoid repetition, details are not described herein again.

The current frequency domain resource allocation method is determined based on an initial or active bandwidth part, rather than an uplink subband. As a result, physical uplink channel transmission or repetition transmission may appear on an unusable resource. Therefore, a method should be designed to ensure that the physical uplink channel transmission or repetition transmission is performed on an uplink usable resource block RB.

To resolve the foregoing problem, an embodiment of this application provides a channel transmission method, including but not limited to the following steps:
Step S1: User equipment UE determines an uplink usable resource, where the uplink usable resource is determined according to configuration information of an uplink subband and frequency domain resource allocation information of a physical uplink channel.

The configuration information of the uplink UL subband may be a cell-level signalling configuration or a UE-level signalling configuration. The configuration information of the uplink subband may be used to configure a time-frequency resource of the UL subband. The frequency domain resource allocation information of the physical uplink channel may include frequency domain resource allocation information of a PUCCH or frequency domain resource allocation information of a PUSCH. The frequency domain resource allocation information of the physical uplink channel may be a cell-level signalling configuration or a UE-level signalling configuration. The frequency domain resource allocation information of the physical uplink channel may be configured by using higher layer signalling or may be indicated by using DCI. The frequency domain resource allocation information of the physical uplink channel includes a PUCCH resource or a PUSCH resource.

Optionally, the frequency domain resource allocation information of the physical uplink channel is determined according to a bandwidth part BWP configured by the network side device.

Step S2: The UE performs uplink transmission on the uplink usable resource.

In this way, by restricting a frequency domain resource of the physical uplink channel to an uplink usable resource block, potential discarding of partial or all resources of the physical uplink channel due to an unusable resource is avoided. This ensures reliability and a latency of physical uplink channel transmission, thereby facilitating completion of a random access procedure.

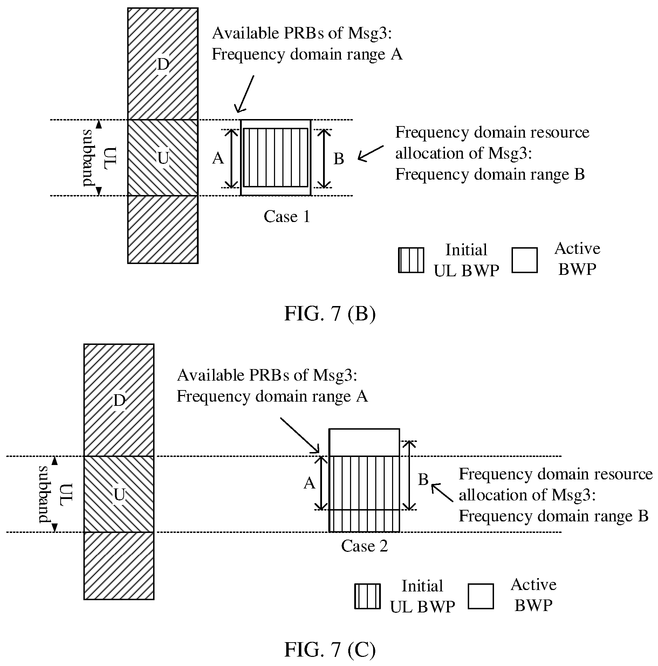

For example, as shown in FIG. 7 (B) to FIG. 7 (D), the UE may determine that UL usable RBs (UL usable RBs) are used for physical uplink channel (for example, a PUSCH scheduled by an RAR UL grant) transmission, restricting the PUSCH transmission within the UL usable RBs.

Optionally, in this application, the uplink usable resource is an intersection set of an uplink subband configured by the configuration information of the uplink subband and a frequency domain resource indicated by the frequency domain resource allocation information of the physical uplink channel.

For example, the physical uplink channel is PUSCH transmission (for example, a Msg3 message) scheduled by an RAR UL grant. If a higher layer indicates an active UL BWP (active UL BWP) for the PUSCH transmission scheduled by the RAR UL grant, frequency domain resource allocation for determining that the PUSCH transmission is within the active UL BWP is as follows:

If the active UL BWP has a same SCS and a same CP length as an initial BWP, and the active UL BWP includes all RBs of the initial BWP (initial BWP), or the active BWP is the initial BWP, the frequency domain resource allocation (frequency domain range A) for the PUSCH transmission scheduled by the RAR UL grant is equal to a bandwidth of the initial BWP. In this case, usable RBs are actually an intersection set of the UL subband and the initial BWP, as shown in case 1 in FIG. 7 (B).

Otherwise, the frequency domain resource allocation for the PUSCH transmission scheduled by the RAR UL grant is a start PRB of the active BWP, and a maximum quantity of RBs is equal to a quantity of RBs of the initial BWP. Usable RBs is an intersection set of the UL subband and the frequency domain resource allocation of the physical uplink channel, as shown in case 2 in FIG. 7 (C) and case 3 in FIG. 7 (D).

It should be noted that for case 2 in FIG. 7 (C) and case 3 in FIG. 7 (D), the PUSCH transmission scheduled by the RAR UL grant can only be restricted to UL usable RBs, that is, in the frequency domain range A, a size of the frequency domain range A is less than that of a frequency domain range B.

Optionally, this embodiment may be used for one physical uplink channel transmission, or may be used for physical uplink channel repetition transmission.

Similarly, for HARQ-ACK transmission corresponding to Msg4/MsgB on a UL subband, it is also advisable to restrict transmission within UL usable PRBs. This prevents discarding of partial or all resources of the PUCCH carrying the HARQ-ACK for Msg4/MsgB, thereby ensuring reliability and a latency of PUCCH transmission.

Optionally, that the physical uplink channel is PUCCH transmission that carries a HARQ-ACK is used as an example, and a first-hop start PRB index of the PUCCH may be ${RB}_{starting , UL usable RB} + {RB}_{UL usable RB}^{offset} + \left⌊{r}_{PUCCH}/{N}_{CS}\right⌋$; and
a second-hop start PRB index of the PUCCH transmission may be ${N}_{UL usable RB}^{size} - 1 - {RB}_{UL usable RB}^{offset} - \left⌊{r}_{PUCCH}/{N}_{CS}\right⌋$.

Alternatively, a first-hop start PRB index of the PUCCH transmission may be: ${N}_{UL usable RB}^{size} - 1 - {RB}_{UL usable RB}^{offset} - \left⌊\left({r}_{PUCCH}-x\right)/{N}_{CS}\right⌋ ;$ and
a second-hop start PRB index of the PUCCH transmission may be: ${RB}_{starting , UL usable RB} + {RB}_{UL usable RB}^{offset} + \left⌊\left({r}_{PUCCH}-x\right)/{N}_{CS}\right⌋ .$

*RB_{starting}, _{UL usable RB}* is a start RB index of UL usable RBs, and may be determined according to a parameter configured by the network or a predefined parameter. ${N}_{UL usable RB}^{size}$ is a bandwidth size of a UL usable RB, *N_{CS}* is a total quantity of cyclic shift indexes, and *r_{PUCCH}* is a PUCCH index determined by the UE and the index may be determined based on a predefined manner. ${RB}_{{}_{UL usable RB}}^{offset}$ is a frequency offset of a UL usable RB and may be determined in a predefined manner or configured by the network, or may be a same value as a frequency domain offset of a BWP, for example, the value may be 0,2,3,4, $floor \left({N}_{UL usable RB}^{size}/4\right)$. *x* may be an integer that is predefined or is configured by the network, for example, *x* = 8 or 4.

Optionally, the foregoing two manners may be selected based on a predefined manner, for example, determined according to a PUCCH index. In an embodiment, when $\left⌊{r}_{PUCCH}/x\right⌋ = 0$, a first-hop start PRB index of the PUCCH transmission that carries the HARQ-ACK may be ${RB}_{starting , UL usable RB} + {RB}_{UL usable RB}^{offset} + \left⌊{r}_{PUCCH}/{N}_{CS}\right⌋$; and
a second-hop start PRB index of the PUCCH transmission may be ${N}_{UL usable RB}^{size} - 1 - {RB}_{UL usable RB}^{offset} - \left⌊{r}_{PUCCH}/{N}_{CS}\right⌋$.

When $\left⌊{r}_{PUCCH}/x\right⌋ = 1$, a first-hop start PRB index of the PUCCH transmission may be: ${N}_{UL usable RB}^{size} - 1 - {RB}_{UL usable RB}^{offset} - \left⌊\left({r}_{PUCCH}-x\right)/{N}_{CS}\right⌋ ;$ and
a second-hop start PRB index of the PUCCH transmission may be: ${RB}_{starting , UL usable RB} + {RB}_{UL usable RB}^{offset} + \left⌊\left({r}_{PUCCH}-x\right)/{N}_{CS}\right⌋ .$

Optionally, this embodiment may be used for one physical uplink control channel transmission or physical uplink control channel repetition transmission. In this manner, the PUCCH carrying the HARQ-ACK for Msg4/MsgB falls into an uplink usable resource, thereby ensuring reliability and a latency of PUCCH transmission, thereby facilitating completion of a random access procedure.

Further, the method further includes step S3: If a target resource is outside the uplink usable resource, the UE does not perform uplink transmission on the target resource.

In this way, by restricting a frequency domain resource of the physical uplink channel to an uplink usable resource block, potential discarding of partial or all resources of the physical uplink channel due to an unusable resource is avoided. This ensures reliability and a latency of physical uplink channel transmission, thereby facilitating completion of a random access procedure. The foregoing describes the channel transmission method embodiment in the embodiments of this application, and the following further describes an apparatus embodiment corresponding to the method.

An embodiment of this application further provides a channel transmission apparatus, including:
a processing module, configured to determine an uplink usable resource, where the uplink usable resource is determined according to configuration information of an uplink subband and frequency domain resource allocation information of a physical uplink channel; and
a sending module, configured to perform uplink transmission on the uplink usable resource.

Optionally, the uplink usable resource is an intersection set of an uplink subband configured by the configuration information of the uplink subband and a frequency domain resource indicated by the frequency domain resource allocation information of the physical uplink channel.

Optionally, the processing module is further configured to: if a target resource is outside the uplink usable resource, skip performing uplink transmission on the target resource.

Optionally, the frequency domain resource allocation information of the physical uplink channel is determined according to a bandwidth part BWP configured by a network side device.

It can be understood that, for an implementation process of each implementation mentioned in this apparatus embodiment, reference may be made to the related descriptions of the method embodiment, and a same or corresponding technical effect is achieved. To avoid repetition, details are not described herein again.

As shown in FIG. 12, an embodiment of this application further provides a communication device 1200, including a processor 1201 and a memory 1202. The memory 1202 stores a program or an instruction that can be run on the processor 1201. For example, when the communication device 1200 is UE, the program or the instruction is executed by the processor 1201 to implement the steps of the foregoing channel repetition transmission method embodiment, and a same technical effect can be achieved. When the communication device 1200 is a network side device, the program or the instruction is executed by the processor 1201 to implement the steps of the foregoing channel repetition transmission method or channel transmission method embodiment, and a same technical effect can be achieved. To avoid repetition, details are not described herein again.

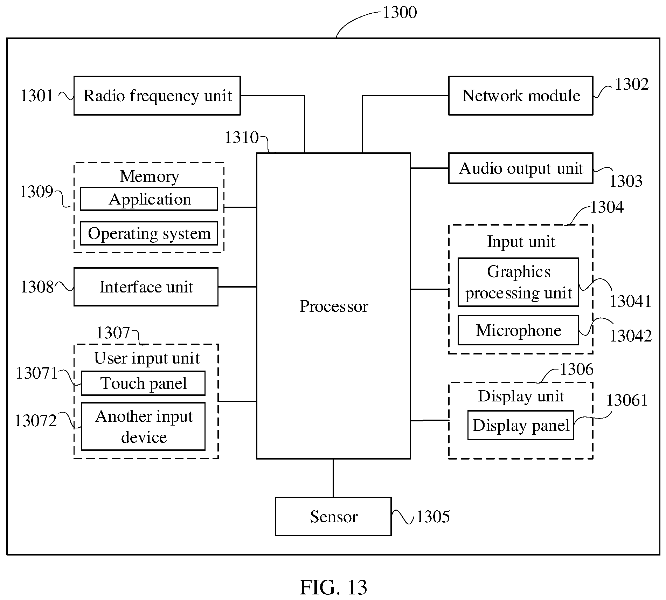

An embodiment of this application further provides UE, including a processor and a communication interface. The communication interface is coupled to the processor, and the processor is configured to run a program or an instruction to implement the steps of the method embodiment shown in FIG. 3. This UE embodiment corresponds to the foregoing method embodiment on the UE side. Each implementation process and implementation of the foregoing method embodiment may be applicable to this UE embodiment, and a same technical effect can be achieved. Specifically, FIG. 13 is a schematic structural diagram of hardware of UE according to an embodiment of this application.

The UE 1300 includes but is not limited to at least a part of components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art can understand that the UE 1300 may further include the power supply (for example, a battery) that supplies power to each component. The power supply may be logically connected to the processor 1310 by using a power supply management system, so as to manage functions such as charging, discharging, and power consumption by using the power supply management system. The UE structure shown in FIG. 13 constitutes no limitation on the UE, and the UE may include more or fewer components than those shown in the figure, or combine some components, or have different component arrangements. Details are not described herein.

It should be understood that, in this embodiment of this application, the input unit 1304 may include a graphics processing unit (Graphics Processing Unit, GPU) 13041 and a microphone 13042, and the graphics processing unit 13041 processes image data of a still image or a video that is obtained by an image capturing apparatus (for example, a camera) in a video capturing mode or an image capturing mode. The display unit 1306 may include a display panel 13061. The display panel 13061 may be configured in a form such as a liquid crystal display or an organic light-emitting diode. The user input unit 1307 includes at least one of a touch panel 13071 and another input device 13072. The touch panel 13071 is also referred to as a touchscreen. The touch panel 13071 may include two parts: a touch detection apparatus and a touch controller. The another input device 13072 may include but is not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 1301 may transmit the downlink data to the processor 1310 for processing. In addition, the radio frequency unit 1301 may send uplink data to the network side device. Usually, the radio frequency unit 1301 includes but is not limited to an antenna, an amplifier, a transceiver, a coupler, a low noise amplifier, a duplexer, and the like.

The memory 1309 may be configured to store a software program or an instruction and various data. The memory 1309 may mainly include a first storage area for storing a program or an instruction and a second storage area for storing data. The first storage area may store an operating system, and an application or an instruction required by at least one function (for example, a sound playing function or an image playing function). In addition, the memory 1309 may include a volatile memory or a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1309 in this embodiment of this application includes but is not limited to these memories and a memory of any other proper type.

The processor 1310 may include one or more processing units. Optionally, an application processor and a modem processor are integrated into the processor 1310. The application processor mainly processes an operating system, a user interface, an application, and the like. The modem processor mainly processes a wireless communication signal, for example, a baseband processor. It can be understood that, alternatively, the modem processor may not be integrated into the processor 1310.

The radio frequency unit 1301 is configured to obtain configuration information of physical uplink channel repetition transmission, where the configuration information is used to determine an available time-frequency resource for the physical uplink channel repetition transmission; and perform transmission of the physical uplink channel repetition transmission by using the available time-frequency resource, where the available time-frequency resource includes at least one of the following: a UL subband in a DL time domain unit in which there is a synchronization signal and physical broadcast channel block SSB; a UL subband in a DL time domain unit in which there is a common DL channel; a UL subband in a DL time domain unit in which there is no SSB or common DL channel; a UL subband in a UL time domain unit; a UL time domain unit; and a flexible time domain unit.

In a possible implementation, the radio frequency unit 1301 is specifically configured to receive the configuration information of the physical uplink channel repetition transmission from a network side device.

In a possible implementation, the configuration information includes at least one of the following:
a UL subband in a downlink DL time domain unit;
a UL subband in a UL time domain unit;
a time-frequency resource that is in an available UL subband configured by the network side device;
a transmit power threshold configured by the network side device for different UL resource types or UL resources;
a first frequency domain distance threshold;
a second frequency domain distance threshold;
a time interval threshold;
a UL time domain unit; and
a time-frequency resource that is in a flexible time domain unit and determined according to a predefined rule, where
the predefined rule includes at least one of the following:
   in a case that a DL subband is configured and no UL subband is configured in a flexible time domain unit, a time-frequency resource outside the DL subband is determined as an available time-frequency resource;
   in a case that a UL subband is configured in a flexible time domain unit and a transmit power in the UL subband is less than a first transmit power threshold, a time-frequency resource in the UL subband configured in the flexible time domain unit is determined as an available time-frequency resource; and
   in a case that no DL subband is configured and no UL subband is configured in a flexible time domain unit, a time domain unit with transmit power less than a second transmit power threshold is determined as an available time-frequency resource.

In a possible implementation, the configuration information includes the transmit power threshold; and
the processor 1310 is configured to: before the radio frequency unit 1310 transmits the physical uplink channel repetition transmission by using the available time-frequency resource, in a case that a transmit power in a first UL subband is less than or equal to a transmit power threshold corresponding to the first UL subband, determine that a time-frequency resource configured in the first UL subband is the available time-frequency resource, where the first UL subband includes at least one UL subband in a time domain unit of the UE.

In a possible implementation, the configuration information includes the first frequency domain distance threshold; and
the apparatus further includes a processor 1310, where
the processor 1310 is configured to: before the radio frequency unit 1310 transmits the physical uplink channel repetition transmission by using the available time-frequency resource, in a case that a frequency domain distance between a second UL subband in a first time domain unit and a first GB in the first time domain unit is greater than or equal to the first frequency domain distance threshold, determine that a time-frequency resource configured in the second UL subband is the available time-frequency resource.

In a possible implementation, the configuration information includes the second frequency domain distance threshold; and
the processor 1310 is configured to: before the radio frequency unit 1310 transmits the physical uplink channel repetition transmission by using the available time-frequency resource, in a case that a frequency domain distance between a third UL subband in a second time domain unit and a first DL subband in the second time domain unit is greater than or equal to the second frequency domain distance threshold, determine that a time-frequency resource configured in the third UL subband is the available time-frequency resource.

In a possible implementation, the configuration information includes the time interval threshold; and
the processor 1310 is configured to: before the radio frequency unit 1310 performs transmission of the physical uplink channel repetition transmission by using the available time-frequency resource, in a case that a time interval between a fourth UL subband in a third time domain unit and a first downlink signal in the third time domain unit is greater than or equal to the time interval threshold, determine that a time-frequency resource configured in the fourth UL subband is the available time-frequency resource.

In a possible implementation, the time interval between the fourth UL subband and the downlink signal includes a time interval between a start symbol of the fourth UL subband and the first downlink signal or a time interval between an end symbol of the fourth UL subband and the first downlink signal.

In a possible implementation, the first downlink signal includes at least one of the following:
a synchronization signal;
a broadcast signal;
a system information channel; and
a control channel for scheduling system information.

An embodiment of this application provides UE. Because an available time-frequency resource for physical uplink channel repetition transmission may be determined by using configuration information of the physical uplink channel repetition transmission, the UE may perform data transmission by using the available time-frequency resource determined according to the configuration information, thereby improving utilization efficiency of a transmission resource of the UE, reducing a transmission latency of the UE, and improving an effect of enhanced coverage.

In addition, the UE in this embodiment of this application may further implement the steps of the foregoing channel transmission method embodiments, and can achieve a same technical effect. To avoid repetition, details are not described herein again.

It can be understood that, for an implementation process of each implementation mentioned in this embodiment, reference may be made to the related descriptions of the method embodiment, and a same or corresponding technical effect is achieved. To avoid repetition, details are not described herein again.

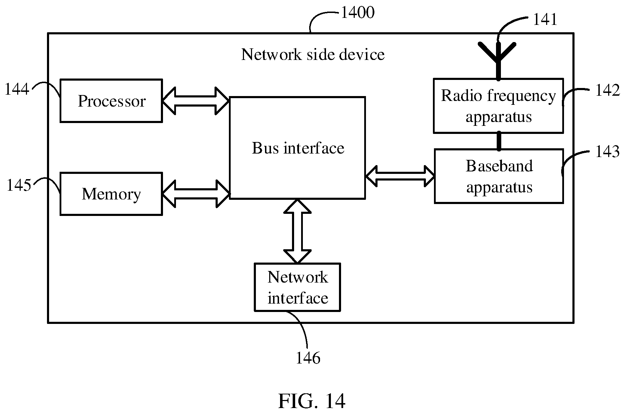

An embodiment of this application further provides a network side device, including a processor and a communication interface. The communication interface is coupled to the processor, and the processor is configured to run a program or an instruction to implement the steps of the method embodiment shown in FIG. 14. This network side device embodiment corresponds to the foregoing method embodiment on the network side device. Each implementation process and implementation of the foregoing method embodiment may be applicable to this network side device embodiment, and a same technical effect can be achieved.

Specifically, an embodiment of this application further provides a network side device. As shown in FIG. 14, the network side device 1400 includes an antenna 141, a radio frequency apparatus 142, a baseband apparatus 143, a processor 144, and a memory 145. The antenna 141 is connected to the radio frequency apparatus 142. In an uplink direction, the radio frequency apparatus 142 receives information by using the antenna 141, and sends the received information to the baseband apparatus 143 for processing. In a downlink direction, the baseband apparatus 143 processes information that needs to be sent, and sends processed information to the radio frequency apparatus 142. The radio frequency apparatus 142 processes the received information, and sends processed information by using the antenna 141.

In the foregoing embodiment, the method performed by the network side device may be implemented in the baseband apparatus 143. The baseband apparatus 143 includes a baseband processor.

The baseband apparatus 143 may include, for example, at least one baseband board, where a plurality of chips are disposed on the baseband board. As shown in FIG. 14, one chip, for example, the baseband processor, is connected to the memory 145 through a bus interface, to invoke a program in the memory 145 to perform the operations of the network device shown in the foregoing method embodiment.

The network side device may further include a network interface 146, and the interface is, for example, a common public radio interface (Common Public Radio Interface, CPRI).

Specifically, the network side device 1400 in this embodiment of the present invention further includes an instruction or a program that is stored in the memory 145 and that can be run on the processor 144. The processor 144 invokes the instruction or the program in the memory 145 to perform the method performed by the modules shown in FIG. 11, and a same technical effect is achieved. To avoid repetition, details are not described herein again.

An embodiment of this application further provides a readable storage medium. The readable storage medium stores a program or an instruction, and the program or the instruction is executed by a processor to implement the processes of the foregoing channel repetition transmission method embodiment, and a same technical effect can be achieved. To avoid repetition, details are not described herein again.

The processor is a processor in the UE in the foregoing embodiment. The readable storage medium includes a computer readable storage medium, such as a computer read-only memory ROM, a random access memory RAM, a magnetic disk, or an optical disc. In some examples, the readable storage medium may be a non-transient readable storage medium.

An embodiment of this application further provides a chip. The chip includes a processor and a communication interface, the communication interface is coupled to the processor, and the processor is configured to run a program or an instruction to implement the processes of the foregoing channel repetition transmission method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program/program product. The computer program/program product is stored in a storage medium, and the program/program product is executed by at least one processor to implement the processes of the foregoing channel repetition transmission method or channel transmission method embodiment, and a same technical effect can be achieved. To avoid repetition, details are not described herein again.

An embodiment of this application further provides a channel repetition transmission system, including UE and a network side device. The UE may be configured to perform the steps of the foregoing channel repetition transmission method, and the network side device may be configured to perform the steps of the foregoing channel repetition transmission method.

It should be noted that, in this specification, the terms "include", "comprise", or their any other variant are intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the foregoing descriptions of the embodiments, a person skilled in the art may clearly understand that the foregoing method embodiment may be implemented by computer software product in addition to a necessary general hardware platform or by hardware. The computer software product is stored in a storage medium (for example, a ROM, a RAM, a magnetic disk, or an optical disc) and includes several instructions, so that the UE or the network side device executes the methods described in the embodiments of this application.

The embodiments of this application are described above with reference to the accompanying drawings, but this application is not limited to the above specific implementations, and the above specific implementations are merely illustrative but not restrictive. Under the enlightenment of this application, a person of ordinary skill in the art can make many forms of implementations without departing from the purpose of this application and the protection scope of the claims, all of which fall within the protection of this application.

## Claims

1. A channel repetition transmission method, comprising:
obtaining, by user equipment UE, configuration information of physical uplink channel repetition transmission, wherein the configuration information is used to determine an available time-frequency resource for the physical uplink channel repetition transmission; and
performing, by the UE, transmission of the physical uplink channel repetition transmission by using the available time-frequency resource, wherein
the available time-frequency resource comprises at least one of the following:
a UL subband in a DL time domain unit in which there is a synchronization signal and physical broadcast channel block SSB;
a UL subband in a DL time domain unit in which there is a common DL channel;
a UL subband in a DL time domain unit in which there is no SSB or common DL channel;
a UL subband in a UL time domain unit;
a UL time domain unit; and
a flexible time domain unit.

2. The method according to claim 1, wherein the obtaining, by UE, configuration information of physical uplink channel repetition transmission comprises:
receiving, by the UE, the configuration information of the physical uplink channel repetition transmission from a network side device.

3. The method according to claim 2, wherein the configuration information comprises at least one of the following:
a UL subband in a downlink DL time domain unit;
a UL subband in a UL time domain unit;
a time-frequency resource that is in an available UL subband configured by the network side device;
a transmit power threshold configured by the network side device for different UL resource types or UL resources;
a first frequency domain distance threshold;
a second frequency domain distance threshold;
a time interval threshold;
a UL time domain unit; and
a time-frequency resource that is in a flexible time domain unit and determined according to a predefined rule, wherein
the predefined rule comprises at least one of the following:
in a case that a DL subband is configured and no UL subband is configured in a flexible time domain unit, a time-frequency resource outside the DL subband is determined as an available time-frequency resource;
in a case that a UL subband is configured in a flexible time domain unit and a transmit power in the UL subband is less than a first transmit power threshold, a time-frequency resource in the UL subband configured in the flexible time domain unit is determined as an available time-frequency resource; and
in a case that no DL subband is configured and no UL subband is configured in a flexible time domain unit, a time domain unit with transmit power less than a second transmit power threshold is determined as an available time-frequency resource.

4. The method according to claim 3, wherein the configuration information comprises the transmit power threshold; and
before the performing, by the UE, transmission of the physical uplink channel repetition transmission by using the available time-frequency resource, the method further comprises:
in a case that a transmit power in a first UL subband is less than or equal to a transmit power threshold corresponding to the first UL subband, determining, by the UE, that a time-frequency resource configured in the first UL subband is the available time-frequency resource, wherein the first UL subband comprises at least one UL subband in a time domain unit of the UE.

5. The method according to claim 3, wherein the configuration information comprises the first frequency domain distance threshold; and
before the performing, by the UE, transmission of the physical uplink channel repetition transmission by using the available time-frequency resource, the method further comprises:
in a case that a frequency domain distance between a second UL subband in a first time domain unit and a first GB in the first time domain unit is greater than or equal to the first frequency domain distance threshold, determining, by the UE, that a time-frequency resource configured in the second UL subband is the available time-frequency resource.

6. The method according to claim 3, wherein the configuration information comprises the second frequency domain distance threshold; and
before the performing, by the UE, transmission of the physical uplink channel repetition transmission by using the available time-frequency resource, the method further comprises:
in a case that a frequency domain distance between a third UL subband in a second time domain unit and a first DL subband in the second time domain unit is greater than or equal to the second frequency domain distance threshold, determining, by the UE, that a time-frequency resource configured in the third UL subband is the available time-frequency resource.

7. The method according to claim 3, wherein the configuration information comprises the time interval threshold; and
before the performing, by the UE, transmission of the physical uplink channel repetition transmission by using the available time-frequency resource, the method further comprises:
in a case that a time interval between a fourth UL subband in a third time domain unit and a first downlink signal in the third time domain unit is greater than or equal to the time interval threshold, determining, by the UE, that a time-frequency resource configured in the fourth UL subband is the available time-frequency resource.

8. The method according to claim 7, wherein the time interval between the fourth UL subband and the downlink signal comprises a time interval between a start symbol of the fourth UL subband and the first downlink signal or a time interval between an end symbol of the fourth UL subband and the first downlink signal.

9. The method according to claim 7 or 8, wherein the first downlink signal comprises at least one of the following:
a synchronization signal;
a broadcast signal;
a system information channel; and
a control channel for scheduling system information.

10. A channel repetition transmission method, comprising:
sending, by a network side device, configuration information of physical uplink channel repetition transmission to UE, wherein the configuration information is used to determine an available time-frequency resource for the physical uplink channel repetition transmission, wherein
the available time-frequency resource comprises at least one of the following:
a UL subband in a DL time domain unit in which there is a synchronization signal and physical broadcast channel block SSB;
a UL subband in a DL time domain unit in which there is a common DL channel;
a UL subband in a DL time domain unit in which there is no SSB or common DL channel;
a UL subband in a UL time domain unit;
a UL time domain unit; and
a flexible time domain unit.

11. The method according to claim 10, wherein the configuration information comprises at least one of the following:
a UL subband in a downlink DL time domain unit;
a UL subband in a UL time domain unit;
a time-frequency resource that is in an available UL subband configured by the network side device;
a transmit power threshold configured by the network side device for different UL resource types or UL resources;
a first frequency domain distance threshold;
a second frequency domain distance threshold;
a time interval threshold;
a UL time domain unit; and
a time-frequency resource that is in a flexible time domain unit and determined according to a predefined rule, wherein
the predefined rule comprises at least one of the following:
in a case that a DL subband is configured and no UL subband is configured in a flexible time domain unit, a time-frequency resource outside the DL subband is determined as an available time-frequency resource;
in a case that a UL subband is configured in a flexible time domain unit and a transmit power in the UL subband is less than a first transmit power threshold, a time-frequency resource in the UL subband configured in the flexible time domain unit is determined as an available time-frequency resource; and
in a case that no DL subband is configured and no UL subband is configured in a flexible time domain unit, a time domain unit with transmit power less than a second transmit power threshold is determined as an available time-frequency resource.

12. A channel repetition transmission apparatus, comprising an obtaining module and a transmission module, wherein
the obtaining module is configured to obtain configuration information of physical uplink channel repetition transmission, wherein the configuration information is used to determine an available time-frequency resource for the physical uplink channel repetition transmission; and
the transmission module is configured to perform transmission of the physical uplink channel repetition transmission by using the available time-frequency resource, wherein
the available time-frequency resource comprises at least one of the following:
a UL subband in a DL time domain unit in which there is a synchronization signal and physical broadcast channel block SSB;
a UL subband in a DL time domain unit in which there is a common DL channel;
a UL subband in a DL time domain unit in which there is no SSB or common DL channel;
a UL subband in a UL time domain unit;
a UL time domain unit; and
a flexible time domain unit.

13. The apparatus according to claim 12, wherein the obtaining module is specifically configured to receive the configuration information of the physical uplink channel repetition transmission from a network side device.

14. The apparatus according to claim 13, wherein the configuration information comprises at least one of the following:
a UL subband in a downlink DL time domain unit;
a UL subband in a UL time domain unit;
a time-frequency resource that is in an available UL subband configured by the network side device;
a transmit power threshold configured by the network side device for different UL resource types or UL resources;
a first frequency domain distance threshold;
a second frequency domain distance threshold;
a time interval threshold;
a UL time domain unit; and
a time-frequency resource that is in a flexible time domain unit and determined according to a predefined rule, wherein
the predefined rule comprises at least one of the following:
in a case that a DL subband is configured and no UL subband is configured in a flexible time domain unit, a time-frequency resource outside the DL subband is determined as an available time-frequency resource;
in a case that a UL subband is configured in a flexible time domain unit and a transmit power in the UL subband is less than a first transmit power threshold, a time-frequency resource in the UL subband configured in the flexible time domain unit is determined as an available time-frequency resource; and
in a case that no DL subband is configured and no UL subband is configured in a flexible time domain unit, a time domain unit with transmit power less than a second transmit power threshold is determined as an available time-frequency resource.

15. The apparatus according to claim 14, wherein the configuration information comprises the transmit power threshold; and
the apparatus further comprises a determining module, wherein
the determining module is configured to: before the transmission module transmits the physical uplink channel repetition transmission by using the available time-frequency resource, in a case that a transmit power in a first UL subband is less than or equal to a transmit power threshold corresponding to the first UL subband, determine that a time-frequency resource configured in the first UL subband is the available time-frequency resource, wherein the first UL subband comprises at least one UL subband in a time domain unit of the UE.

16. The apparatus according to claim 14, wherein the configuration information comprises the first frequency domain distance threshold; and
the apparatus further comprises a determining module, wherein
the determining module is configured to: before the transmission module transmits the physical uplink channel repetition transmission by using the available time-frequency resource, in a case that a frequency domain distance between a second UL subband in a first time domain unit and a first GB in the first time domain unit is greater than or equal to the first frequency domain distance threshold, determine that a time-frequency resource configured in the second UL subband is the available time-frequency resource.

17. The apparatus according to claim 14, wherein the configuration information comprises the second frequency domain distance threshold; and
the apparatus further comprises a determining module, wherein
the determining module is configured to: before the transmission module transmits the physical uplink channel repetition transmission by using the available time-frequency resource, in a case that a frequency domain distance between a third UL subband in a second time domain unit and a first DL subband in the second time domain unit is greater than or equal to the second frequency domain distance threshold, determine that a time-frequency resource configured in the third UL subband is the available time-frequency resource.

18. The apparatus according to claim 14, wherein the configuration information comprises the time interval threshold; and
the apparatus further comprises a determining module, wherein
the determining module is configured to: before the transmission module performs transmission of the physical uplink channel repetition transmission by using the available time-frequency resource, in a case that a time interval between a fourth UL subband in a third time domain unit and a first downlink signal in the third time domain unit is greater than or equal to the time interval threshold, determine that a time-frequency resource configured in the fourth UL subband is the available time-frequency resource.

19. The apparatus according to claim 18, wherein the time interval between the fourth UL subband and the downlink signal comprises a time interval between a start symbol of the fourth UL subband and the first downlink signal or a time interval between an end symbol of the fourth UL subband and the first downlink signal.

20. The apparatus according to claim 18 or 19, wherein the first downlink signal comprises at least one of the following:
a synchronization signal;
a broadcast signal;
a system information channel; and
a control channel for scheduling system information.

21. A channel repetition transmission apparatus, comprising a sending module, wherein the sending module is configured to send configuration information of physical uplink channel repetition transmission to UE, wherein the configuration information is used to determine an available time-frequency resource for the physical uplink channel repetition transmission, wherein
the available time-frequency resource comprises at least one of the following:
a UL subband in a DL time domain unit in which there is a synchronization signal and physical broadcast channel block SSB;
a UL subband in a DL time domain unit in which there is a common DL channel;
a UL subband in a DL time domain unit in which there is no SSB or common DL channel;
a UL subband in a UL time domain unit;
a UL time domain unit; and
a flexible time domain unit.

22. The apparatus according to claim 21, wherein the configuration information comprises at least one of the following:
a UL subband in a downlink DL time domain unit;
a UL subband in a UL time domain unit;
a time-frequency resource that is in an available UL subband configured by the network side device;
a transmit power threshold configured by the network side device for different UL resource types or UL resources;
a first frequency domain distance threshold;
a second frequency domain distance threshold;
a time interval threshold;
a UL time domain unit; and
a time-frequency resource that is in a flexible time domain unit and determined according to a predefined rule, wherein
the predefined rule comprises at least one of the following:
in a case that a DL subband is configured and no UL subband is configured in a flexible time domain unit, a time-frequency resource outside the DL subband is determined as an available time-frequency resource;
in a case that a UL subband is configured in a flexible time domain unit and a transmit power in the UL subband is less than a first transmit power threshold, a time-frequency resource in the UL subband configured in the flexible time domain unit is determined as an available time-frequency resource; and
in a case that no DL subband is configured and no UL subband is configured in a flexible time domain unit, a time domain unit with transmit power less than a second transmit power threshold is determined as an available time-frequency resource.

23. A channel transmission method, comprising:
determining, by user equipment UE, an uplink usable resource, wherein the uplink usable resource is determined according to configuration information of an uplink subband and frequency domain resource allocation information of a physical uplink channel; and
performing, by the UE, uplink transmission on the uplink usable resource.

24. The method according to claim 23, wherein the uplink usable resource is an intersection set of an uplink subband configured by the configuration information of the uplink subband and a frequency domain resource indicated by the frequency domain resource allocation information of the physical uplink channel.

25. The method according to claim 23, further comprising:
if a target resource is outside the uplink usable resource, skipping performing, by the UE, uplink transmission on the target resource.

26. The method according to claim 23, wherein the frequency domain resource allocation information of the physical uplink channel is determined according to a bandwidth part BWP configured by a network side device.

27. UE, comprising a processor and a memory, wherein the memory stores a program or an instruction that can be run on the processor, and the program or the instruction is executed by the processor to implement the steps of the channel repetition transmission method according to any one of claims 1 to 9 and 23 to 26.

28. A network side device, comprising a processor and a memory, wherein the memory stores a program or an instruction that can be run on the processor, and the program or the instruction is executed by the processor to implement the steps of the channel repetition transmission method according to claim 10 or 11.

29. A readable storage medium, wherein the readable storage medium stores a program or an instruction, and the program or the instruction is executed by a processor to implement the steps of the channel repetition transmission method according to any one of claims 1 to 9 and 23 to 26 or the steps of the channel repetition transmission method according to claim 10 or 11.
